# EUROPÄISCHE PATENTSCHRIFT

(11) **EP 2 270 320 B1**
(45) Veröffentlichungstag und Bekanntmachung des Hinweises auf die Patenterteilung: **19.12.2018**
(21) Anmeldenummer: 10003970.0
(22) Anmeldetag: 14.04.2010
(51) Int. Cl.: F01N 13/08, F01N 3/08, F01N 13/00

(54) **Sondenstutzen und Verfahren zu dessen Herstellung**
Probe support and method for its production
Supports de sondes et leur procédé de fabrication

(30) Priorität: 30.06.2009 DE 202009008997 U
(43) Veröffentlichungstag der Anmeldung: 05.01.2011
(73) Patentinhaber: Fischer & Kaufmann GmbH & Co. KG, 57413 Finnentrop (DE)
(72) Erfinder: Bischopink, Hugo, 57413 Finnentrop (DE)
(74) Vertreter: Wunderlich & Heim Patentanwälte Partnerschaftsgesellschaft mbB

(56) Entgegenhaltungen:
- EP-A1- 0 818 616
- FR-A1- 2 851 486
- JP-A- 2002 285 838

## Beschreibung

Die Erfindung betrifft ein Verfahren zur Herstellung eines Sondenstutzens für eine Messsonde mit einem Aufnahmebereich zum Aufnehmen der Messsonde und einen Befestigungsbereich zum Befestigen des Sondenstutzens an einen Grundkörper gemäß dem Oberbegriff des Anspruchs 1. Die Erfindung betrifft weiterhin eine Abgasleitung nach dem Oberbegriff des Anspruchs 9.

Sondenstutzen sind beispielsweise aus der DE 42 24 251 C1, der DE 10 2005 018 881 A1 oder der DE 10 2006 024 944 A1 bekannt. Diese bekannten Sondenstutzen sind als ein massiver Ringkörper ausgebildet, dessen Außenseite kuppel- oder kugelkalottenförmig gestaltet ist. Dies erlaubt die Anordnung des Sondenstutzens in verschiedenen Winkellagen an rohrförmigen Abgasleitungen, um eine Messsonde zur Abgasmessung aufzunehmen. Diese massiven ringförmigen Sondenstutzen werden in einer entsprechenden Öffnung in der rohrförmigen Abgasleitung angeordnet und durch Schweißen mit dieser verbunden. Die Messsonde kann dann in einen innenseitigen Aufnahmebereich des Sondenstutzens eingeschraubt werden, so dass die Messsonde in die Abgasleitung hineinragt.

In bestimmten Einbaulagen ist bei diesen bekannten Sondenstutzen die Verbindungsfuge zwischen der Abgasleitung und der Außenseite des Sondenstutzens teilweise verdeckt und für normale Schweißeinrichtungen nicht oder nur bedingt zugänglich. Eine geschlossene Schweißnaht ist jedoch für die Dichtigkeit der Abgasleitung von großer Wichtigkeit. Darüber hinaus kann aufgrund der Wärmeeinbringung beim Schweißen ein Wärmeverzug auch an der Innenseite des ringförmigen Sondenstutzens auftreten. Hierdurch kann ein Einschrauben der empfindlichen Messsonde beeinträchtigt oder sogar unmöglich werden. Auch ragen diese Sondenstutzen teilweise in die Abgasleitung hinein und stellen einen unerwünschten Strömungswiderstand dar.

Aus der EP 0 818 616 A1, der FR 2 851 486 A1, DE 40 22 303 A1 und der DE 201 20 895 U1 gehen weitere Anschlussstutzen hervor. Diese weisen komplexe Formgebungen mit stark unterschiedlichen Wanddicken auf, so dass diese nur durch aufwendigere Herstellungsverfahren, etwa durch Gießen, Schmieden oder Schweißen, hergestellt werden können.

Aus der JP 2002285838 A geht ein länglicher, rohrförmiger Sondenstutzen hervor, an dessen Enden radiale Flansche ausgebildet sind.

Der Erfindung liegt die **Aufgabe** zugrunde, ein Verfahren, welches eine einfache und kostengünstige Herstellung eines Sondenstutzens ermöglicht, sowie eine Abgasleitung mit Sondenstutzen anzugeben, welches ein günstiges Strömungsverhalten aufweist.

Die Aufgabe wird nach der Erfindung durch ein Verfahren mit den Merkmalen des Anspruchs 1 beziehungsweise eine Abgasleitung mit den Merkmalen des Anspruchs 9 gelöst. Bevorzugte Ausführungen sind in den abhängigen Ansprüchen angegeben.

Es ist erfindungsgemäß vorgesehen, dass der Sondenstutzen einstückig aus einem Blech gefertigt ist, dass zum Bilden des Aufnahmebereiches eine Innenhülse und zum Bilden des Befestigungsbereiches eine Außenhülse ausgebildet sind, welche zur Innenhülse radial beabstandet ist, und dass die Innenhülse und die Außenhülse über einen Verbindungssteg miteinander verbunden sind.

Ein Grundgedanke der Erfindung kann darin gesehen werden, den Aufnahmebereich für die Messsonde räumlich von dem Befestigungsbereich zu trennen. Dabei wird der Aufnahmebereich durch eine Innenhülse gebildet, während der Befestigungsbereich eine Außenhülse umfasst. Innenhülse und Außenhülse stehen ausschließlich über einen ringförmigen Verbindungssteg miteinander in Verbindung. Durch diese räumliche Trennung kann der Aufnahmebereich für die Messsonde und der Befestigungsbereich unabhängig voneinander frei, entsprechend den jeweiligen Anforderungen ausgebildet werden. Durch einen gebildeten ringförmigen Freiraum zwischen Innen- und Außenhülse wird zudem die Gefahr eines Wärmeverzuges der Innenhülse beim Anschweißen der Außenhülse an einen Grundkörper weitgehend vermieden.

Ein weiterer Vorteil der Erfindung besteht darin, dass der Sondenstutzen in wirtschaftlicher Weise durch Blechumformung gebildet wird. Das Fertigungsverfahren der Blechumformung ist material- und energiesparend. Zudem wird eine hohe Bauteilfestigkeit bei einem geringen Materialeinsatz erreicht. Das hierdurch erreichte geringe Bauteilgewicht ist insbesondere für den Einsatz des Sondenstutzens an rohrförmigen Abgasleitungen von Kraftfahrzeugen vorteilhaft.

Grundsätzlich kann die Innenhülse mit beliebigen Befestigungseinrichtungen zum Haltern der Messsonde versehen sein. Nach der Erfindung ist es jedoch besonders bevorzugt, dass die Innenhülse zum Aufnehmen der Messsonde mit einem Innengewinde versehen ist. Die Messsonde, welche vorzugsweise eine so genannte Lambda-Sonde zum Einsatz bei geregelten Katalysatoren ist, weist ein entsprechendes Außengewinde auf. Dabei ist es ein Vorteil der Erfindung, dass die Innenhülse hinsichtlich Durchmesser und Länge unabhängig von der Form der Außenhülse gestaltet und an die Dimensionierung der Messsonde angepasst werden kann. Unter Messsonden sind auch andere Sensoren und Messeinrichtungen zu verstehen, welche etwa zur Messung der Temperatur, Feuchtigkeit oder anderer zur Motorsteuerung benötigter Werte einsetzbar sind.

Dabei ist es nach der Erfindung besonders materialschonend, dass das Innengewinde spanlos eingeformt ist.

Die weitere bevorzugte Ausführungsform der Erfindung besteht darin, dass die Außenhülse einen radial nach außen vorstehenden Rand aufweist. Hierdurch kann ein Kontaktbereich mit dem zu verbindenden Grundkörper, welcher üblicherweise eine rohrförmige Abgasleitung ist, vergrößert werden. Der so radial nach außen vorstehende Randflansch erhöht den Kontaktbereich mit dem Grundkörper, vergrößert die Kontaktfuge und verlängert die Umfangslinie. Die Umfangslinie kann mit einer beliebigen Kontur ausgebildet sein, so dass der Rand eine unterschiedliche Breite entlang des Umfangs aufweisen kann. Dies erleichtert das Anschweißen des Sondenstutzens an den Grundkörper und ist förderlich für eine zuverlässige Dichtigkeit der Verbindung.

Nach der Erfindung wird eine besonders stabile Ausbildung des Sondenstutzens dadurch erreicht, dass die Außenhülse koaxial zur Innenhülse angeordnet ist.

Eine alternative Ausgestaltung der Erfindung besteht darin, dass eine Mittenachse der Innenhülse versetzt und/oder angewinkelt zu einer Mittenachse der Außenhülse angeordnet ist. Durch diese freie Anordnungswahl der Innenhülse sind auch spezielle angewinkelte Anordnungen der Messsonde möglich, was beispielsweise für besondere Anordnungen der Messsondenspitze in dem Strömungskanal von Bedeutung ist.

Nach der Erfindung ist es weiterhin vorteilhaft, dass die Wandstärken der Innenhülse, der Außenhülse und des Verbindungssteges gleich ausgebildet sind. Hierdurch wird in den einzelnen Teilen ein ähnliches thermisches und schwingungsmäßiges Verhalten erreicht. Dies schont die Messsonde und erhöht deren Lebensdauer.

Anzumerken ist weiterhin, dass anders als bei den bekannten ringförmigen Sondenstutzen die Außenhülse an der Außenseite des rohrförmigen Grundkörpers angebracht werden kann und dabei die Innenhülse nicht zwingend in den Innenraum der rohrförmigen Abgasleitung hineinragen muss. Die Innenhülse ragt dabei nicht über den Randflansch der Außenhülse hinaus. Eine unnötige Beeinträchtigung der Strömung innerhalb der Abgasleitung oder einer anderen Strömungsleitung durch den Sondenstutzen kann so vermieden werden.

Da die Befestigung des Sondenstutzens über die Außenhülse mit dem Rand erfolgt, muss die Öffnung in dem Grundkörper oder der Abgasleitung nicht mehr exakt an die Kontur des Sondenstutzens angepasst sein. Dies vereinfacht auch die Herstellung des Grundkörpers beziehungsweise der Abgasleitung erheblich. Nach der Erfindung ist es besonders bevorzugt, dass der Sondenstutzen an einer Öffnung in einem Abgasleitungsrohr als Grundkörper befestigt ist, wobei ein Durchmesser der Öffnung größer als ein Durchmesser der Innenhülse und kleiner als ein Durchmesser der Außenhülse oder des Randes der Außenhülse ausgebildet ist. Die Durchmesser beziehen sich grundsätzlich auf die jeweiligen Außendurchmesser und sind nicht auf rein kreisförmige Öffnungen oder Hülsenkonturen beschränkt. Die Öffnungen und Konturen können oval, eckig oder davon abweichend gestaltet sein.

Nach der Erfindung ist es vorgesehen, dass der Sondenstutzen durch Tiefziehen und Stülpen aus einer Blechronde gebildet ist. Unter Blechronde ist ein im Wesentlichen kreisscheibenförmiges Blechteil zu verstehen.

Die Erfindung wird nachfolgend anhand von bevorzugten Ausführungsbeispielen weiter erläutert, welche schematisch in den Figuren dargestellt sind.

In den Figuren zeigen:
- Fig. 1:: eine perspektivische Ansicht eines erfindungsgemäß hergestellten Sondenstutzens;
- Fig. 2:: eine Fertigungsabfolge von vier Schritten zur erfindungsgemäßen Herstellung eines Sondenstutzens in Draufsicht; und
- Fig. 3:: entsprechende Querschnittsansichten durch das Werkstück entlang dem Schnitt A-A von Fig. 2.

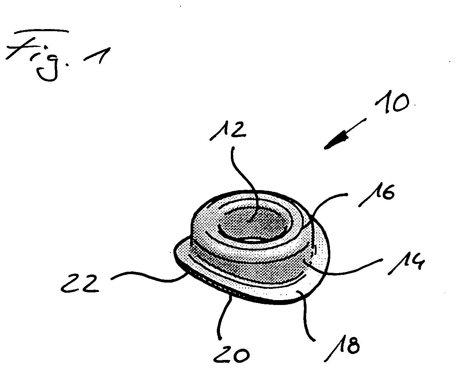

Ein erfindungsgemäß Hergesteller Sondenstutzen 10 gemäß Fig. 1 weist eine Innenhülse 12 und eine koaxial dazu angeordnete Außenhülse 14 auf, welche im oberen Bereich durch einen ringförmigen, im Querschnitt gebogenen Verbindungssteg 16 miteinander verbunden sind. An dem unteren Bereich der Außenhülse 14 erstreckt sich ein radial vorstehender krempenartiger Rand 18, dessen Unterseite als ein Kontaktbereich 20 für eine zylinderrohrförmige Abgasleitung ausgebildet ist. Entlang einer außenseitigen Umfangslinie 22 des Randes 18 kann ein Anschweißen des Sondenschutzes 10 an eine Abgasleitung erfolgen. Grundsätzlich sind aber auch andere Verbindungsarten, insbesondere Klebeverbindungen, denkbar.

Während der Rand 18 der Außenhülse 14 zur Befestigung an einer Abgasleitung dient, ist die Innenseite der Innenhülse 12 zur Aufnahme und zur Halterung einer nicht dargestellten Messsonde ausgebildet. Hierzu ist insbesondere an der Innenseite der Innenhülse 12 ein Innengewinde ausgebildet, welches in Fig. 1 jedoch nicht dargestellt ist.

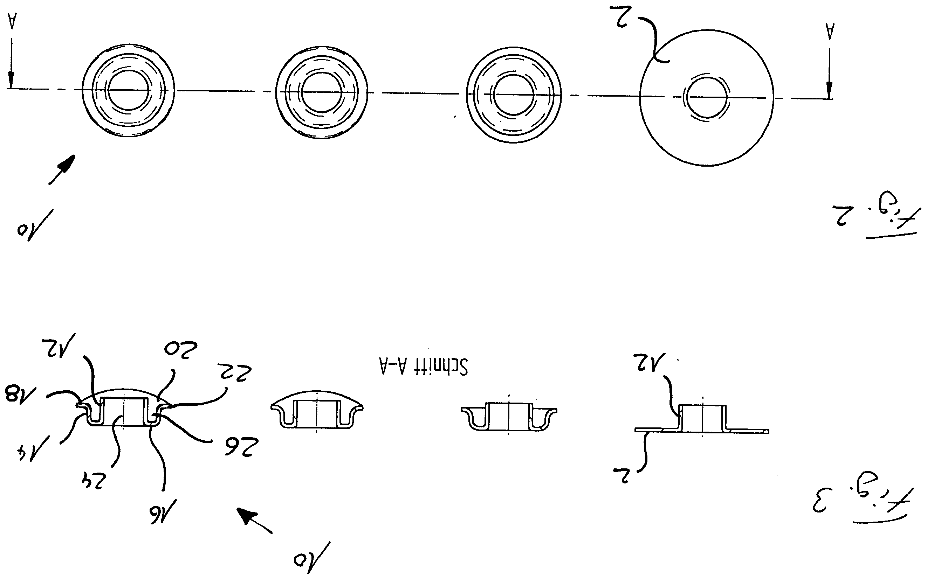

Gemäß den Figuren 2 und 3 wird eine bevorzugte Herstellmöglichkeit für den Sondenstutzen 10 beschrieben. Ausgehend von einer kreisscheibenförmigen Blechronde wird zunächst durch einen Tiefziehschritt aus der ebenen Blechronde die axial vorstehende Innenhülse 12 geformt, wobei die Mittenöffnung ausgestanzt wird. Der äußere Rondenbereich 2 wird anschließend in mehreren Tiefzieh- oder Stülpschritten in axialer Richtung etwa koaxial zur Innenhülse 12 umgeformt. Hierdurch wird die Außenhülse 14 koaxial zu einer Mittenachse 24 der Innenhülse ausgeformt. Ein verbliebener ebener Zwischenabschnitt, welcher mit geeigneten Radien in die Innenhülse 12 beziehungsweise die Außenhülse 14 übergeht, bildet den Verbindungssteg 16 zwischen der Innenhülse 12 und der Außenhülse 14.

Die Innenhülse 12 und die Außenhülse 14 sind dabei so voneinander radial beabstandet, dass zwischen der Außenseite der Innenhülse 12 und der Innenseite der Außenhülse 14 ein ringförmiger Freiraum 26 gebildet ist. Die Außenhülse 14 weist von der Innenhülse 12 einen Abstand auf, welcher ein Mehrfaches der Wandstärke des Bleches beträgt. Weiter wird beim Tiefziehen der Außenhülse 14 ein radial vorstehender Rand 18 ausgebildet, welcher als ein Befestigungsflansch dient. Die Unterseite des Randes 18 kann dabei in beliebiger Weise als eine Freiformfläche ausgebildet werden, so dass ein großflächiger Kontaktbereich 20 zur Verbindung mit der gebogenen Außenseite einer rohrförmigen Abgasleitung oder eines anders ausgeformten Grundkörpers ermöglicht ist. Vorzugsweise erfolgt dann das Befestigen des Sondenstutzens 10 durch ein Verschweißen mittels geschlossener Schweißnaht entlang einer Umfangslinie 22 an der Außenseite des Randes 18.

Grundsätzlich umfasst die Erfindung nicht nur den beschriebenen Sondenstutzen 10 sondern auch das entsprechende Abgasleitungselement, welches mit dem erfindungsgemäßen Sondenstutzen verbunden ist, sowie ein Herstellungsverfahren zur Herstellung des Sondenstutzens aus einem Blechstück.

## Patentansprüche

1. Verfahren zur Herstellung eines Sondenstutzens (10) für eine Messsonde mit
- einem Aufnahmebereich zum Aufnehmen der Messsonde und
- einem Befestigungsbereich zum Befestigen des Sondenstutzens (10) an einem Grundkörper,
- wobei zum Bilden des Aufnahmebereiches eine Innenhülse (12) und zum Bilden des Befestigungsbereiches eine Außenhülse (14) ausgebildet sind, welche zur Innenhülse (12) radial beabstandet ist, und
- die Innenhülse (12) und die Außenhülse (14) über einen Verbindungssteg (16) miteinander verbunden sind,
**dadurch gekennzeichnet,**
- **dass** der Sondenstutzen (10) einstückig aus einer Blechronde gefertigt wird,
- **dass** aus der Blechronde eine Mittenöffnung ausgestanzt wird und in einem Tiefziehschritt die axial vorstehende Innenhülse (12) geformt wird,
- **dass** in Tiefzieh- oder Stülpschritten ein äußerer Rondenbereich (2) der Blechronde in axialer Richtung etwa koaxial zur Innenhülse (12) zu der Außenhülse (14) geformt wird, und
- **dass** ein radial nach außen vorstehender Rand (18) an der Außenhülse (14) beim Tiefziehen ausgebildet wird.

2. Verfahren nach Anspruch 1,
**dadurch gekennzeichnet,**
**dass** die Innenhülse (12) zum Aufnehmen der Messsonde mit einem Innengewinde versehen wird.

3. Verfahren nach Anspruch 2,
**dadurch gekennzeichnet,**
**dass** das Innengewinde spanlos eingeformt wird.

4. Verfahren nach einem der Ansprüche 1 bis 3,
**dadurch gekennzeichnet,**
**dass** der Rand (18) einen Kontaktbereich (20) aufweist, welcher zur Auflage an dem Grundkörper angepasst wird.

5. Verfahren nach einem der Ansprüche 1 bis 4,
**dadurch gekennzeichnet,**
**dass** die Außenhülse (14) koaxial zur Innenhülse (12) angeordnet wird.

6. Verfahren nach einem der Ansprüche 1 bis 4,
**dadurch gekennzeichnet,**
**dass** eine Mittenachse (24) der Innenhülse (12) versetzt und/oder angewinkelt zu einer Mittenachse der Außenhülse (14) angeordnet wird.

7. Verfahren nach einem der Ansprüche 1 bis 6,
**dadurch gekennzeichnet,**
**dass** die Wandstärke der Innenhülse (12), der Außenhülse (14) und des Verbindungssteges (16) gleich ausgebildet wird.

8. Verfahren nach einem der Ansprüche 1 bis 7,
**dadurch gekennzeichnet,**
**dass** die Innenhülse (12) innerhalb der Außenhülse (14) angeordnet ist und über den flanschartigen Rand (18) der Außenhülse (14) nicht hinausragt.

9. Abgasleitung, insbesondere für ein Kraftfahrzeug mit Verbrennungsmotor, wobei an einer Öffnung an dem rohrförmigen Grundkörper der Abgasleitung ein Sondenstutzen (10) angebracht ist, welcher eine Innenhülse (12) und eine Außenhülse (14) mit einem radialen nach außen vorstehenden Rand (18) aufweist,
**dadurch gekennzeichnet,**
- **dass** der Sondenstutzen (10) nach einem der Ansprüche 1 bis 8 aus einer Blechronde hergestellt ist,
- **dass** aus der Blechronde eine Mittenöffnung ausgestanzt und durch Tiefziehen axial vorstehend die Innenhülse (12) angeformt ist, welche zum Aufnehmen einer Messsonde ausgebildet ist,
- **dass** ein äußerer Rondenbereich (2) in axialer Richtung koaxial zur Innenhülse (12) zu der Außenhülse (14) geformt ist, welche zum Befestigen des Sondenstutzens (10) an dem Grundkörper ausgebildet ist,
- **dass** an einem unteren Endbereich der Außenhülse (14) der radiale Rand (18) angeordnet ist, dessen Unterseite als Kontaktbereich (20) zu der rohrförmigen Abgasleitung ausgebildet ist,
- **dass** sich die Außenhülse (14) von dem radialen Rand (18) zu einem oberen Endbereich erstreckt, in welchem die Außenhülse (14) über einen ringförmigen, im Querschnitt gebogenen Verbindungssteg (16) mit der Innenhülse (12) verbunden ist, und
- **dass** die Innenhülse (12) innerhalb der Außenhülse (14) angeordnet ist und über den radialen Rand (18) der Außenhülse (14) nicht hinausragt.

## Claims

1. Method for producing a probe connector (10) for a measuring probe having
- a receiving portion for receiving the measuring probe and
- a fastening portion for fastening the probe connector (10) to a main body,
- wherein an inner sleeve (12) is designed to form the receiving portion and an outer sleeve (14), which is at a radial distance from the inner sleeve (12), is designed to form the fastening portion, and
- the inner sleeve (12) and the outer sleeve (14) are connected to one another via a connecting bar (16),
**characterized in that**
- the probe connector (10) is produced as a single piece from a circular sheet metal blank,
- that a central opening is stamped out of the circular sheet metal blank, and the axially projecting inner sleeve (12) is formed during a deep drawing step,
- that, during deep drawing or reverse drawing steps, an outer circular portion (2) of the circular sheet metal blank is formed in an axial direction, which is approximately coaxial with respect to the inner sleeve (12), to become the outer sleeve, and
- that an edge (18), which projects radially outward, is formed on the outer sleeve (14) during deep drawing.

2. Method according to claim 1,
**characterized in that**
the inner sleeve (12) is provided with an inner thread for receiving the measuring probe.

3. Method according to claim 2,
**characterized in that**
the internal thread is formed without metal removal.

4. Method according to anyone of claims 1 to 3,
**characterized in that**
the edge (18) features a contact portion (20), which is adapted for support on the main body.

5. Method according to anyone of claims 1 to 4,
**characterized in that**
the outer sleeve (14) is arranged in a direction coaxially to the inner sleeve (12).

6. Method according to anyone of claims 1 to 4,
**characterized in that**
a central axis (24) of the inner sleeve (12) is offset from and/or at an angle to a central axis of the outer sleeve (14).

7. Method according to anyone of claims 1 to 6,
**characterized in that**
the inner sleeve (12), the outer sleeve (14), and the connecting bar (16) are designed to have the same wall thickness.

8. Method according to anyone of claims 1 to 7,
**characterized in that**
the inner sleeve (12) is arranged within the outer sleeve (14) and does not protrude beyond the flange-like edge (18) of the outer sleeve (14).

9. Exhaust pipe, in particular for a motor vehicle with a combustion engine, wherein a probe connector (10) is attached to an opening on the tubular main body of the exhaust pipe, said probe connector featuring an inner sleeve (12) and an outer sleeve (14), which has an edge (18) that projects radially outward,
**characterized in that**,
- the probe connector (10) is produced from a circular sheet metal blank according to anyone of claims 1 to 8,
- that a central opening is stamped out of the circular sheet metal blank, and the inner sleeve (12) is formed by means of deep drawing to project in an axial direction wherein the inner sleeve is designed to receive a measuring probe,
- that an outer circular blank portion (2) is formed in an axial direction, coaxially to the inner sleeve (12) to become the outer sleeve (14), which is designed for fastening the probe connector (10) to the main body,
- that the radial edge (18), the underside of which is designed as contact portion (20) for the tubular exhaust pipe, is arranged on a lower end portion of the outer sleeve (14),
- that the outer sleeve (14) extends from the radial edge (18) to an upper end portion, where the outer sleeve (14) is connected to the inner sleeve (12) via a ring-shaped connecting bar (16), which is curved in cross-section, and
- that the inner sleeve (12) is arranged within the outer sleeve (14) and does not protrude beyond the radial edge (18) of the outer sleeve (14).

## Revendications

1. Procédé servant à fabriquer un support de sonde (10) pour une sonde de mesure avec
- une zone de logement servant à loger la sonde de mesure et
- une zone de fixation servant à fixer le support de sonde (10) au niveau d'un corps de base,
- dans lequel pour former la zone de logement, un manchon intérieur (12) est réalisé et, pour former la zone de fixation, un manchon extérieur (14) est réalisé, lequel est espacé radialement par rapport au manchon intérieur (12), et
- le manchon intérieur (12) et le manchon extérieur (14) sont reliés l'un à l'autre par l'intermédiaire d'une entretoise de liaison (16),
**caractérisé en ce**
- **que** le support de sonde (10) est confectionné d'un seul tenant à partir d'un rond de tôle,
- **qu'**une ouverture centrale est découpée du rond de tôle et le manchon intérieur (12) faisant saillie de manière axiale est formé lors d'une étape d'emboutissage,
- **que** lors d'étapes d'emboutissage et de rabattement, une zone de rond (2) extérieure du rond de tôle est formée dans une direction axiale par exemple de manière coaxiale par rapport au manchon intérieur (12) en le manchon extérieur (14), et
- **qu'**un bord (18) faisant saillie radialement vers l'extérieur est réalisé au niveau du manchon extérieur (14) lors de l'emboutissage.

2. Procédé selon la revendication 1,
**caractérisé en ce**
**que** le manchon intérieur (12), pour loger la sonde de mesure, est pourvu d'un filetage intérieur.

3. Procédé selon la revendication 2,
**caractérisé en ce**
**que** le filetage intérieur est pratiqué sans enlèvement de copeaux.

4. Procédé selon l'une quelconque des revendications 1 à 3,
**caractérisé en ce**
**que** le bord (18) présente une zone de contact (20), qui est adaptée pour être posée au niveau du corps de base.

5. Procédé selon l'une quelconque des revendications 1 à 4,
**caractérisé en ce**
**que** le manchon extérieur (14) est disposé de manière coaxiale par rapport au manchon intérieur (12).

6. Procédé selon l'une quelconque des revendications 1 à 4,
**caractérisé en ce**
**qu'**un axe central (24) du manchon intérieur (12) est disposé de manière décalée et/ou coudée par rapport à l'axe central du manchon extérieur (14).

7. Procédé selon l'une quelconque des revendications 1 à 6,
**caractérisé en ce**
**que** l'épaisseur de paroi du manchon intérieur (12), du manchon extérieur (14) et de l'entretoise de liaison (16) est réalisée de manière identique.

8. Procédé selon l'une quelconque des revendications 1 à 7,
**caractérisé en ce**
**que** le manchon intérieur (12) est disposé à l'intérieur du manchon extérieur (14) et ne dépasse pas au-delà du bord (18) de type flasque du manchon extérieur (14).

9. Conduit de gaz d'échappement, en particulier pour un véhicule automobile avec un moteur à combustion interne, dans lequel un support de sonde (10) est installé au niveau d'une ouverture au niveau du corps de base de forme tubulaire du conduit de gaz d'échappement, lequel présente un manchon intérieur (12) et un manchon extérieur (14) avec un bord (18) faisant saillie radialement vers l'extérieur,
**caractérisé en ce**
- **que** le support de sonde (10) selon l'une quelconque des revendications 1 à 8 est fabriqué à partir d'un rond de tôle,
- **qu'**une ouverture centrale est découpée du rond de tôle et le manchon intérieur (12), qui est réalisé pour loger une sonde de mesure, est formé de manière à faire saillie axialement par emboutissage,
- **qu'**une zone de rond (2) extérieure est formée dans une direction axiale de manière coaxiale par rapport au manchon intérieur (12) en le manchon extérieur (14), lequel est réalisé pour fixer le support de sonde (10) au niveau du corps de base,
- **qu'**est disposé au niveau d'une zone d'extrémité inférieure du manchon extérieur (14) le bord (18) radial, dont le côté inférieur est réalisé sous la forme d'une zone de contact (20) avec le conduit de gaz d'échappement de forme tubulaire,
- **que** le manchon extérieur (14) s'étend depuis le bord (18) radial vers une zone d'extrémité supérieure, dans laquelle le manchon extérieur (14) est relié au manchon intérieur (12) par l'intermédiaire d'une entretoise de liaison (16) de forme annulaire cintrée dans la section transversale, et
- **que** le manchon intérieur (12) est disposé à l'intérieur du manchon extérieur (14) et ne dépasse pas du bord radial (18) du manchon extérieur (14).
